# DEMANDE DE BREVET EUROPEEN

(11) **EP 1 524 416 A1**
(43) Date de publication de la demande: **20.04.2005**
(21) Numéro de dépôt: 04300664.2
(22) Date de dépôt: 08.10.2004
(51) Int. Cl.: F01N 3/01, B01D 46/50, F01N 3/032, F01N 3/027, F01N 3/022

(54) **Système de filtration électrostatique de particules de suie des gaz d'échappement d'un moteur à combustion interne et procédé de régénération d'un tel système**

(30) Priorité: 17.10.2003 FR 0312197
(71) Demandeur: Renault s.a.s., 92100 Boulogne Billancourt (FR)
(72) Inventeur: Fresnet, François, 92000 Nanterre (FR); Eymerie, Stephane, 27120 Pacy Sur Eure (FR); Viau, Christian, 78390 Bois d'Arcy (FR)

(57) **Abrégé**

Le système de filtration électrostatique comprend au moins une cellule élémentaire de filtration (1) traversée par les gaz d'échappement et comporte une électrode filaire (18,19) et une électrode (5) en un matériau métallique poreux capable de retenir les particules de suie ainsi que des moyens de régénération de ladite électrode poreuse (5) par chauffage. L'alimentation en courant électrique pour la régénération de ladite électrode poreuse (5) est faite par un circuit de régénération comprenant un condensateur (31), chargé par une alimentation en courant électrique à haute tension et un ou plusieurs éléments résistifs (5) ou inductifs.

## Description

La présente invention concerne un système de filtration électrostatique des particules de suie contenues dans les gaz d'échappement d'un moteur à combustion interne, en particulier d'un moteur Diesel pour véhicules automobiles, du type comprenant au moins une cellule élémentaire de filtration traversée par les gaz d'échappement. L'invention a également pour objet un procédé permettant la régénération par intermittence d'une cellule élémentaire de filtration.

On cherche à l'heure actuelle à diminuer au maximum les émissions polluantes des moteurs à combustion interne utilisés dans les véhicules automobiles et, en particulier, à réduire ou éliminer l'émission de particules de suie par les moteurs Diesel.

On connaît, par la demande de brevet WO 00/02549, un ensemble de filtrage de gaz chargés de particules comprenant un filtre électrostatique, à effet couronne ou décharge couronne, comprenant une cage cylindrique à l'intérieur de laquelle pénètrent les gaz d'échappement en vue de leur filtrage. Un tel dispositif possède l'inconvénient que les particules sont principalement chargées négativement par émission d'électrons et attachement des électrons émis avec les particules. Compte tenu de la faible concentration en particules des gaz d'échappement, la probabilité d'attachement des particules avec un électron émis reste faible. Il est alors nécessaire d'alimenter l'électrode centrale avec un niveau d'énergie important pour provoquer une émission électrons importante.

On connaît également, par la demande de brevet EP-A-0 346 803 (KRAMB), un procédé et un dispositif d'élimination de la suie provenant des gaz d'échappement d'un véhicule automobile dans lequel on utilise un mélangeur de chaleur pour procéder à une séparation préalable des matières volatiles ainsi qu'un séparateur électrostatique. La régénération du séparateur électrostatique se fait par chauffage au moyen des gaz d'échappement provenant du moteur à combustion interne, chauffage étant tel que l'on obtienne un auto-allumage des suies stockées dans le séparateur électrostatique. Une telle méthode de régénération n'est possible qu'en raison du refroidissement préalable dû à la présence supplémentaire de l'échangeur de chaleur.

Le brevet US 5 557 923 prévoit la régénération, d'une cellule de filtration électrostatique, qui comporte une électrode poreuse en faisant simplement passer un courant électrique à travers ladite électrode poreuse de façon à la chauffer par effet Joule. Là encore, l'efficacité de la régénération est largement limitée en pratique par la quantité d'énergie électrique disponible sur le réseau basse tension qui équipe le véhicule automobile.

La demanderesse a mis au point un système de filtration électrostatique, ce qui a fait l'objet du dépôt d'une demande de brevet français n° 02 06 304 non encore publiée. Cette demande de brevet décrit un dispositif de filtrage comprenant un passage pour les gaz d'échappement, une électrode externe entourant le passage, formée par un agglomérat ou un enchevêtrement de fibres métalliques perméables aux gaz et aptes à retenir mécaniquement des particules. Unez§§0 électrode interne, du type filaire, est disposée selon l'axe du passage et des moyens d'alimentation électriques des électrodes permettent d'établir un champ électrique avec formation de décharges couronnes pour un filtrage électrostatique des particules.

Le dispositif de filtrage dans cette demande de brevet non publiée, permet simultanément un filtrage mécanique et un filtrage de type électrostatique. En effet, les particules empruntant le passage sont amenées à traverser l'électrode externe formée par un agglomérat ou un enchevêtrement de fibres métalliques qui constituent une multitude d'obstacles permettant l'interception des particules par un processus mécanique intensifié par les interactions électrostatiques entre les fibres reliées à la masse et les particules chargées électriquement. On obtient ainsi un filtrage mécanique doublé d'un filtrage électrostatique.

Dans cette demande de brevet non publiée, la régénération du dispositif filtrage se fait par chauffage de l'électrode externe au moyen de conducteurs noyés dans ladite électrode externe. Ces conducteurs, isolés électriquement de l'électrode externe, sont parcourus par un fort courant qui leur permet d'atteindre des températures de l'ordre de 700 à 800°C, L'énergie correspondante est dissipée dans l'électrode externe par conduction, rayonnement et convection. L'augmentation. de température qui en résulte permet la régénération de l'électrode externe.

Dans un tel dispositif de filtrage, il est en effet important de pouvoir traiter de manière convenable les particules captées et stockées sur l'électrode externe. En effet, les particules de suie chargées électriquement dans l'espace inter-électrodes et attirées par l'électrode externe s'y déposent ou entraînent progressivement la formation d'une agglomération de particules qui peuvent induire des difficultés majeures pour le dispositif de filtrage. En effet, une telle agglomération de particules entraîne une baisse de l'efficacité de filtration globale par le fait que la surface active de l'électrode externe se trouve totalement recouverte et ne permet plus le stockage de nouvelles particules. De plus, des agglomérats de particules stockés sur l'électrode externe, peuvent pénétrer dans le volume inter-électrodes en jouant ainsi le rôle d'un pont entre l'électrode centrale filaire et l'électrode, externe poreuse, induisant des directions de décharge préférentielles qui peuvent conduire à un régime de court-circuit annihilant toute ionisation homogène et charge électrique des particules qui doivent être filtrées,

La simple régénération de l'électrode externe par effet Joule utilisant le réseau basse tension du véhicule automobile pour écouter un courant continu, tel que prévu dans la demande de brevet précitée non encore publiée, nécessite pour une régénération convenable un niveau de courant suffisant pour une augmentation significative de la température de l'électrode externe, qui peut être incompatible avec les capacités du réseau électrique présent dans le véhicule automobile.

La présente, invention a donc pour objet de résoudre cette difficulté et de prévoir un système de filtration qui puisse être convenablement régénéré de manière intermittente en utilisant le réseau électrique présent à bord du véhicule automobile.

A cet effet, le système de filtration électrostatique selon l'invention, destiné à la filtration des particules de suie contenues dans les gaz d'échappement d'un moteur à combustion interne, comprend au moins une cellule élémentaire de filtration traversée par les gaz d'échappement et comportant une électrode filaire et une électrode en un matériau métallique poreux capable de retenir les particules de suie ainsi que des moyens de régénération de ladite électrode poreuse. L'alimentation en courant électrique pour la régénération de ladite électrode poreuse est faite par un circuit de régénération comprenant un condensateur chargé par une alimentation à haute tension et un ou plusieurs éléments résistifs et/ou inductifs.

L'alimentation à haute tension peut avantageusement être la même que celle qui est utilisée pour alimenter l'électrode filaire,

Un convertisseur basse tension/haute tension peut être prévu.

De cette manière, l'énergie nécessaire à la régénération peut être aisément obtenue par le réseau électrique basse tension du véhicule.

Dans une variante avantageuse, le circuit de régénération comprend en outre une bobine, de self induction montée en série.

Selon un premier mode de réalisation, l'électrode poreuse constitue elle-même un élément résistif monté en série dans le circuit de régénération.

Les charges et décharges successives du condensateur haute tension à travers l'électrode poreuse permettent ainsi une dissipation d'énergie au sein de ladite électrode suffisante pour entraîner une augmentation de température provoquant, la combustion des suies retenues par l'électrode.

Selon un deuxième mode de réalisation, c'est l'électrode filaire qui est montée dans le circuit de régénération de façon à créer de façon intermittente, un arc électrique entre ladite électrode filaire et la surface en regard de l'électrode poreuse.

Des éléments en saillie, par exemple des pointes conductrices de l'électricité peuvent avantageusement être montées radialement par rapport à l'électrode filaire en direction de la surface de l'électrode poreuse afin de créer des arcs électriques ponctuels. Un arc électrique ainsi généré par une brusque surtension de l'électrode filaire permet réchauffement local de la surface de l'électrode poreuse sur laquelle s'accumulent une grande partie des particules de suie piégées électrostatiquement par la cellule de filtration. La combustion des particules de suie étant fortement exothermique, cet échauffement localisé suffit pour initier la combustion de l'ensemble du dépôt de particules.

Pour obtenir l'augmentation de température, la plus rapide possible avec le minimum d'énergie consommée, on peut envisager, dans un mode de réalisation avantageux, de limiter le débit des gaz d'échappement, traversant la cellule de filtration pendant les phases de régénération ainsi que d'approvisionner en oxygène supplémentaire pour la combustion des suies.

A cet effet, une vanne de by-pass commandée peut être montée en amont de la cellule élémentaire de filtration. Une conduite de by-pass pouvant être traversée par les gaz d'échappement en phase de régénération, lorsque ladite vanne de by-pass est ouverte, est alors montée en parallèle de ladite cellule de filtration. Une conduite d'injection d'air secondaire peut en outre être reliée à l'entrée de la cellule de fiitration pour injecter de l'air dans la cellule en phase de régénération.

La durée de la phase de régénération est suffisamment courte pour que les gaz d'échappement non traités par la cellule de filtration soient en quantité négligeable

Dans un autre mode de réalisation adapté à un système comprenant plusieurs cellules élémentaires de filtration montées en parallèle sur le flux des gaz d'échappement, une vanne de by-pass commandée est montée en amont de l'ensemble des cellules élémentaires de filtration de façon à pouvoir alternativement isoler du flux des gaz d'échappement, certaines desdites cellules de filtration pendant une phase de régénération partielle, limitée aux dites cellules isolées.

Une partie du système, de filtration est alors régénérée pendant que l'autre partie continue à filtrer les gaz d'échappement. Le débit des gaz d'échappement dans les cellules en cours de régénération est minimal ou nul ce qui facilite l'opération de régénération.

D'une manière générale, le procédé de régénération d'une cellule élémentaire de fiitration électrostatique des particules de suie contenues dans les gaz d'échappement d'un moteur à combustion interne, comportant une électrode filaire et une électrode en un matériau métallique poreux capable de retenir les particules de suie, comprend donc l'utilisation d'une décharge capacitive de haute tension pour générer une énergie, suffisante pour la combustion des suies retenues par l'électrode poreuse.

L'énergie peut être dissipée au sein de l'électrode poreuse elle-même, la combustion des suies étant obtenue par élévation de température de l'électrode poreuse.

En variante, l'énergie peut être dissipée à la surface de l'électrode poreuse par un ou plusieurs arcs électriques.

L'invention sera mieux comprise à l'étude de la description détaillée de quelques modes de réalisation nullement limitatifs illustrés par les dessins annexés, sur lesquels :
- la figure 1 est une vue en coupe axiale d'une cellule de filtration munie de moyens de régénération selon un premier mode de réalisation conforme, à l'invention ;
- la figure 2 est une coupe axiale analogue d'une cellule de filtration munie de moyens de régénération selon un deuxième mode de réalisation, conforme à l'invention
- la figure 3 est une coupe axiale analogue d'une cellule de filtration munie de moyens de régénération selon un troisième mode de réalisation conforme à l'invention ;
- la figure 4 illustre schématiquement le montage, d'une cellule de filtration selon l'invention des gaz d'échappement d'un moteur à combustion interne avec un circuit by-pass ; et
- la figure 5 illustre schématiquement un ensemble de filtrages comportant une pluralité de cellules de filtration avec des moyens de by-pass intégrés.

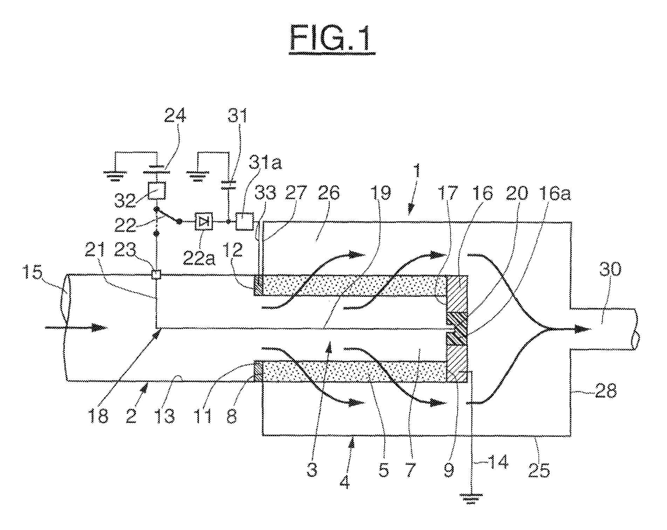

Sur la figure 1, une cellule de filtrage ou de filtration, référencée 1 dans son ensemble, comprend une conduite d'admission 2, un collecteur 4, et une unité de filtrage 3 la conduite d'admission 2 et le collecteur 4.

L'unité de filtrage 3 comprend une électrode externe 5 de forme générale cylindrique et formée par un agglomérat ou un enchevêtrement de fibres métalliques. L'électrode 5 forme un passage axial 7 qu'elle entoure.

L'électrode externe 5 comprend des surfaces frontales radiales 8, 9. La face frontale 8 vient en contact axial avec une couronne 11 de fixation de l'électrode externe 5 sur la conduite d'admission 2. La couronne de fixation 11 comprend une surface externe 12 en contact avec un alésage 13 de la conduite d'admission 2.

L'électrode externe 5 est ouverte du cote de sa surface frontale 8, de sorte que le passage central 7 communique avec la conduite d'admission 2. La conduite d'admission 2 comprend un orifice d'entrée 15 du côté opposé à l'électrode externe 5. Un disque 16 en un matériau conducteur de l'électricité vient en appui axial par une surface radiale 17 contre la surface frontale 9 de l'électrode, externe 5 opposée à la conduite d'admission 2. Le disque 16 ferme axialement le passage central 7 du côté opposé à la conduite d'admission 2.Le disque conducteur 16 est relié à une masse de potentiel nul par un conducteur 14.

L'unité de filtrage 3 comprend également une électrode centrale 18 sous la forme, d'une tige 19 coaxiale à l'électrode externe 5 et dont une extrémité 20 est enfichée dans un insert isolant 16a monté dans la partie centrale du disque isolant 16. L'électrode interne 18 s'étend axialement depuis son extrémité 20 au-delà de la couronne de fixation 11 en étant coudée pour former une portion radiale 21 sortant radialement de la conduite d'admission 2. Un isolateur 23 isole électriquement la paroi, de la conduite d'admission 2 de l'électrode interne 18. La portion radiale 21 est reliée électriquement à une alimentation électrique à haute tension constituée par le réseau basse tension du véhicule automobile symbolisé par la référence 24, en aval duquel est monté un convertisseur basse tension/haute tension 32.

Le collecteur 4 comprend une enveloppe cylindrique 25 entourant la portion de l'électrode externe 5 située en-dehors de la conduite d'admission 2. L'enveloppe cylindrique 25 s'étend axialement au-delà du disque. 16. L'enveloppe 25 comprend un diamètre intérieur supérieur au diamètre extérieur de l'électrode externe 5, de sorte qu'il existe un espace annulaire vide 26 entre l'enveloppe cylindrique 25 et l'électrode externe 5. Le collecteur 4 comprend une paroi radiale 27 assurant l'étanchéité de l'enveloppe 25 située du côté de la conduite d'admission 2. Le collecteur 4 est fermé du côté opposé à la conduite d'admission 2 par une paroi radiale 28 pourvue d'une ouverture centrale dans laquelle débouche une conduite d'évacuation 30.

Les gaz d'échappement chargés de particules de suie entrent dans la conduite d'admission 2 par l'orifice d'entrée 15, puis pénètrent dans le passage central 7 de l'électrode externe 5 qui communique avec la conduite d'admission 2. Le disque 16 empêche le passage axial des gaz d'échappement. Les gaz d'échappement sont déviés radialement et traversent l'électrode externe 5 qui est perméable aux gaz. Les gaz d'échappement passent dans l'espace annulaire 26, puis circulent dans le collecteur 4 vers la conduite d'évacuation 30, La conduite d'évacuation 30 peut être reliée à une sortie d'échappement directement, ou par l'intermédiaire de différents volumes de catalyseurs par exemple du type oxydation réduction des oxydes d'azote.

En passant à travers l'électrode externe 5, les gaz d'échappement chargés de particules sont filtrés mécaniquement. En effet, l'électrode externe 5 est formée par un agglomérat ou un enchevêtrement de fils métalliques qui forment de multiples obstacles capables d'intercepter les particules. Ce processus de filtrage mécanique est intensifié par un filtrage électrostatique résultant des interactions entre l'enchevêtrement de fils métalliques reliés à la masse et les particules chargées électriquement.

Par ailleurs, la cellule de filtrage 1 a également un effet de filtrage électrostatique direct des gaz chargés de particules. L'électrode externe 5 est en effet maintenue à un potentiel nul, l'électrode interne 18 étant portée à un potentiel positif ou négatif. La différence de potentiel créée entre les électrodes externe 5 et interne 18 induit la présence d'un champ électrique dans le passage axial 7. Si ce champ électrique possède une intensité suffisante, en particulier au très proche voisinage de l'électrode interne 18, il se produit une ionisation partielle ou totale des gaz, ou milieu, compris entre les électrodes interne 18 et externe 5.

Un milieu gazeux ionisé comprend des électrons libres, des ions positifs et négatifs. Les particules présentes dans le milieu ionisé se combinent avec des électrons ou des ions en formant des particules chargées. De même, une électronique d'une électrode vers l'autre provoque des collisions entre les électrons et les particules qui se combinent pour former des particules chargées négativement.

La circulation radiale des gaz entraîne les particules chargées vers l'électrode externe 5. Les particules chargées traversant l'électrode externe 5 sont piégées par interception sur l'enchevêtrement de fils métalliques et par des phénomènes d'interactions électrostatiques du fait des charges électriques portées par les dites particules. Les forces de Van Der Walls et les forces de capillarité les particules fixées sur les fils métalliques même après qu'elles aient cédé leurs charges électriques.

En vue de la régénération intermittente de la cellule de filtrage par augmentation significative de la température de l'électrode externe 5, il est prévu, selon l'invention, un condensateur 31 qui peut être chargé par la source de tension 24 après élévation de tension par le convertisseur basse tension/haute tension 32, Le condensateur 31 est monté entre la masse de potentiel nulle et un commutateur rapide 31a qui permet, lorsque le niveau de tension du condensateur 31 est supérieur à un seuil déterminé, de relier directement le condensateur 31 en vue de sa décharge dans l'électrode externe 5 par la connexion 33 qui traverse la couronne de fixation 11.

L'interrupteur 22 peut être commandé et placé dans deux positions. Dans la première position illustrée en pointillés sur la figure 1, l'interrupteur 22 met en communication le convertisseur basse tension/haute tension 32 avec l'électrode centrale 18 pour réaliser la filtration des particules de suie comme, cela a été préalablement explique. Une diode 22a est montrée entre l'interrupteur 22 et le condensateur 31 de façon à éviter tout retour de courant vers le convertisseur 32 lors de la décharge du condensateur 31. Périodiquement, l'interrupteur 22 est commandé de façon à être placé dans la position illustrée en traits pleins sur la figure 1. Dans cette position, l'électrode centrale 18 n'est plus alimentée, Au contraire, le condensateur 31 se charge et se décharge périodiquement dans un circuit RC dont l'électrode externe 5 constitue l'un des éléments résistifs.

Une telle décharge de condensateur, dont la capacité doit être choisie de façon appropriée, permet d'obtenir une énergie de chauffage suffisante pour la régénération de la cellule de filtrage par élévation de température.

A titre d'exemple, on alimentera un condensateur de 10 nF avec un courant de 20 mA sous une tension de 10 kV.

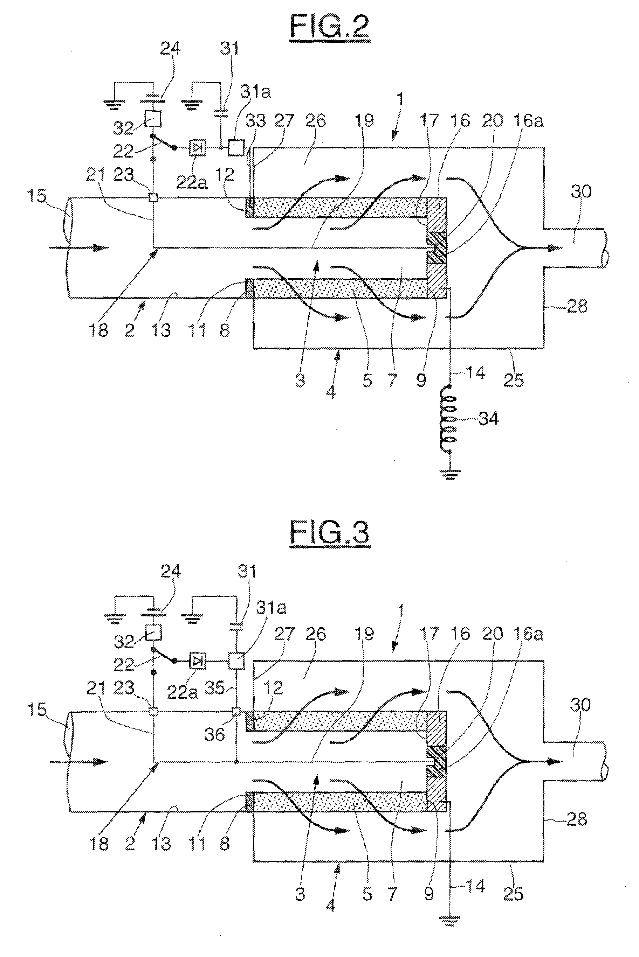

Dans la variante illustrée sur la figure 2, sur laquelle les éléments identiques portent les mêmes références, le circuit, de régénération comprend en plus du condensateur 31, une bobine de self-induction 34 montée en série avec l'élément résistif que constitue l'électrode externe 5 et reliée au disque conducteur 16 par la connexion 14,

Dans les mêmes conditions que précédemment, on obtient alors des charges et décharges successives du condensateur 31 alimenté en haute tension, à travers l'électrode, externe 5 de filtration. On obtient ainsi une dissipation d'énergie suffisante à l'augmentation de température de l'électrode externe 5 pour obtenir sa régénération. Les fréquences caractéristiques des cycles de charge et décharge, sont conditionnées par les capacités du réseau basse tension 24 équipant le véhicule automobile, et qui alimente le convertisseur 32 servant à charger le condensateur 31.

A titre d'exemple, si l'on utilise le condensateur déjà mentionné en référence à l'exemple de la figure 1, alimenté de la même manière, on pourra utiliser une bobine de self-induction de 1 µH.

Dans la variante de la figure 3, sur laquelle les pièces identiques portent les mêmes références, le circuit de régénération comprend, les mêmes éléments que dans le mode de réalisation de la figure 1. Toutefois, au lieu que la décharge du condensateur 31 se fasse ici lors des phases de régénération par chauffage de l'électrode externe 5, on procède à la création d'un ou plusieurs arcs électriques. A cet effet, le courant de décharge du condensateur 31 est amené à travers le commutateur 31a à l'électrode 18 par une connexion électrique 35 qui traverse la paroi de la conduite d'admission 2 par un isolateur 36 et est directement reliée à l'électrode 18. La brutale surtension qui en résulte et qui est appliquée à l'électrode centrale 18, 19, entraîne le développement d'un ou plusieurs arcs électriques entre la tige 19 et la surface interne de l'électrode poreuse 5, sur laquelle se sont accumulées un grand nombre de particules piégées. On peut envisager de disposer en outre le long de la tige 19 une pluralité de pointes radiales, de façon à former des arcs électriques localisés.

La combustion des particules de suie étant fortement exothermique, l'injection d'une énergie localisée suffit alors à initier la combustion de l'ensemble du dépôt des particules de suie dès qu'une masse critique de particules se retrouve stockée à la surface de l'électrode 5. Le développement de l'arc électrique, comme indiqué précédemment, permet ainsi réchauffement local des particules de suie amassées à la surface de l'électrode 5, La combustion qui en résulte se propage ensuite à l'ensemble des particules piégées dans l'électrode 5, ce qui permet sa complète régénération.

Un ensemble complet de filtration comprend généralement plusieurs cellules élémentaires de filtration. La régénération peut être effectuée simultanément sur l'ensemble des cellules élémentaires de filtration en injectant dans l'ensemble du dispositif la puissance nécessaire à une telle régénération simultanée.

Pour assurer l'augmentation de température la plus rapide possible avec le minimum d'énergie consommée, il est avantageux de limiter au maximum les transferts de chaleur avec les gaz d'échappement provenant du moteur, qui transitent au travers des éléments de filtration. A cet effet, il est intéressant de déclencher la régénération lorsque le débit des gaz d'échappement traversant les cellules de filtration est réduit. On peut envisager des dispositifs de by-pass ne laissant circuler dans les cellules de filtration en phase de régénération qu'un débit minimal suffisant pour l'approvisionnement en oxygène, nécessaire à la combustion des suies.

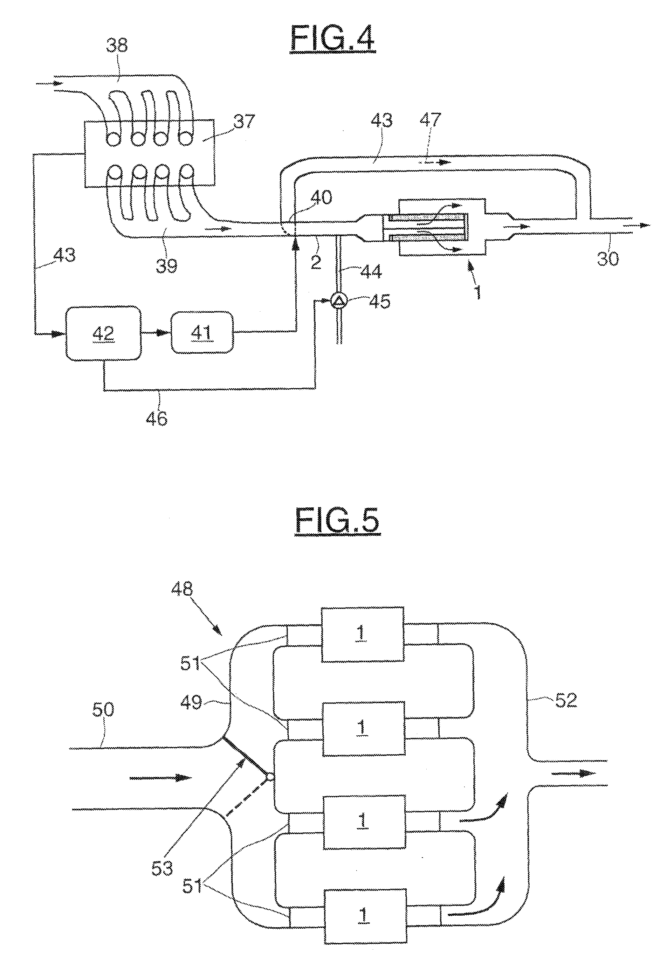

La figure 4 illustre schématiquement des moyens permettant l'obtention d'un tel résultat. On retrouve sur figure 4 une cellule élémentaire, de filtration 1, étant entendu que dans la réalité le système de filtration comporterait plusieurs cellules élémentaires du même type. Le moteur à combustion interne 37 est alimenté en mélange d'air et de carburant par les conduits d'admission 38. Les gaz d'échappement sont véhiculés par la conduite d'échappement 39 qui est reliée à la conduite d'admission 2 de la cellule de filtration 1. Une vanne de by-pass 40 est montée à l'entrée de la conduite d'admission 2 et est commandée, par un bloc de pilotage 41 recevant des signaux de commande par le calculateur 42 du moteur 37. Le calculateur reçoit également par la connexion 43 des informations sur le fonctionnement instantané du moteur 37. La vanne de by-pass 40 est montée à l'entrée d'une conduite de by-pass 43, qui permet de court-circuiter le passage des gaz d'échappement à travers cellule de filtrage 1. La conduite de by-pass 43 rejoint la conduite d'évacuation 30 en aval de la cellule de filtrage 1.

Afin de favoriser la combustion des particules de suie lors de la phase de régénération, une conduite d'injection d'air secondaire 44 est reliée à la conduite d'admission 2. L'air est aspiré par une soufflante 45 commandée par le calculateur 42 auquel elle est reliée par la connexion 46.

Pour la phase de régénération de la cellule de filtrage 1, le calculateur 42 envoie les informations nécessaires à la vanne de by-pass 40 par l'intermédiaire du bloc de pilotage 41 ainsi qu'à la soufflante d'injection 45 pour fermer progressivement la ligne d'échappement principale 39 et enrichir l'écoulement des gaz dans la conduite, d'admission 2 en oxygène par le débit de la soufflante 45. Simultanément, la régénération de la cellule élémentaire de filtrage 1 est déclenchée par action sur l'interrupteur 22 illustré sur les figures précédentes.

Bien entendu, la durée de la régénération est relativement courte, de telle sorte que les gaz d'échappement non traités sont véhiculés dans la conduite de by-pass 43 et schématisés par la flèche en pointillés 47 en quantité infime par rapport à la quantité totale des gaz d'échappement rejetés par le moteur thermique.

La figure 5 illustre une variante de by-pass interne.

Sur cette figure, un ensemble de filtrage 48 comprend un distributeur 49 relié à une entrée commune 50 qui véhicule les gaz d'échappement chargés en particules de suie. Le distributeur 49 présente une pluralité de sorties 51, ici au nombre de quatre. Chaque sortie 51 est reliée à l'entrée d'une cellule de filtrage 1 du type décrit précédemment. Un collecteur général 52 est relié aux sorties des différentes cellules de filtrage 1. Un ensemble, comprend également une unité de commande, non illustrée sur la figure, pour déclencher les phases de régénération. Une vanne de by-pass 53 est montée à l'entrée du distributeur 49 de façon à pouvoir occuper différentes positions.

Dans une position illustrée en traits pleins sur la figure 5, deux des cellules de filtrage 1 ne sont plus traversées par les gaz d'échappement, tandis que les autres cellules de filtrage sont toujours traversées par les gaz d'échappement. Il est alors possible de déclencher la phase de régénération des deux cellules de filtrage qui ne sont plus traversées par les gaz d'échappement. La régénération de l'ensemble du dispositif de filtrage n'est donc que partielle pendant cette phase : seule une partie de l'ensemble des cellules de filtrage est régénérée pendant que l'autre partie des cellules de filtrage continue de filtrer. Pendant la régénération, les cellules de filtrage en cours de régénération sont traversées par un flux minima de gaz d'échappement compte tenu des fuites au travers de la vanne de by-pass 53. Les gaz d'échappement continuent d'être filtrés par au moins une partie du dispositif de filtration, pendant que l'autre partie est régénérée.

Après cette opération de régénération partielle, la vanne de by-pass 53 est placée dans la position illustrée en pointillés sur la figure 5 et l'autre partie des cellules de filtration est alors régénérée.

La vanne de by-pass 53 peut également être placée en position centrale, de façon à laisser passer les gaz d'échappement dans l'ensemble des cellules de filtrage en dehors des périodes de régénération.

## Revendications

1. Système de filtration électrostatique des particules de suie contenues dans les gaz d'échappement d'un moteur à combustion interne, du type comprenant au moins une cellule élémentaire de filtration (1) traversée par les gaz d'échappement et comportant une électrode externe (5) en un matériau métallique poreux capable de retenir les particules de suie, formant un passage axial, et une électrode filaire (18, 19) disposée co-axialement à l'électrode externe (5) ainsi que des moyens de régénération de ladite électrode externe poreuse par chauffage, **caractérisé par le fait que** pour la régénération de la cellule de filtration, ladite électrode externe poreuse est alimentée en courant électrique par un circuit de régénération comprenant un condensateur (31), chargé par une alimentation électrique à haute tension, un ou plusieurs éléments résistifs (5) et un commutateur (31a) reliant directement le condensateur (31) à l'électrode externe ou à l'électrode filaire (18), le condensateur se chargeant et se déchargeant périodiquement.

2. Système selon la revendication 1, **caractérisé par le fait que** ledit circuit de régénération comprend une bobine de self induction (34) montée en série.

3. Système selon les revendications 1 ou 2, **caractérisé par le fait que** ledit circuit de régénération comprend un convertisseur (32) basse tension/haute tension.

4. Système selon l'une quelconque des revendications précédentes, **caractérisé par le fait que** l'électrode poreuse (5) constitue un élément résistif monté en série dans le circuit de régénération.

5. Système selon l'une quelconque des revendications 1 à 3, **caractérisé par le fait que** l'électrode filaire (18) est montée dans le circuit de régénération de façon à créer de façon intermittente, un arc électrique entre ladite électrode filaire et la surface en regard de l'électrode poreuse.

6. Système selon l'une quelconque des revendications précédentes, **caractérisé par le fait qu'**une vanne de by-pass commandée (40) est montée en amont de ladite cellule élémentaire de filtration (1) et qu'une conduite de by-pass (43) pouvant être traversée par les gaz d'échappement en phase de régénération, lorsque ladite vanne de by-pass est ouverte, est montée en parallèle de ladite cellule de filtration (1), une conduite d'injection d'air secondaire (44) étant en outre reliée à rentrée de la cellule de filtration pour injecter de l'air dans la cellule en phase de régénération.

7. Système selon l'une quelconque des revendications 1 à 5, comprenant plusieurs cellules élémentaires de filtration montées en parallèle sur le flux des gaz d'échappement, **caractérisé par le fait qu'**une vanne de by-pass commandée (53) est montée en amont de l'ensemble des cellules élémentaires de filtration de façon à pouvoir alternativement isoler du flux des gaz d'échappement, certaines desdites cellules de filtration pendant une phase de régénération partielle limitée aux dites cellules isolées.

8. Procédé de régénération d'une cellule élémentaire de filtration électrostatique des particules de suie contenues dans les gaz d'échappement d'un moteur à combustion interne, comportant une électrode filaire (18) et une électrode (5) en un matériau métallique poreux capable de retenir les particules de suie, **caractérisé par** l'utilisation d'une décharge capacitive de haute tension pour générer une énergie suffisante pour la combustion des suies retenues par l'électrode poreuse.

9. Procédé selon la revendication 8, **caractérisé par le fait que** l'énergie est dissipée au sein de l'électrode poreuse elle-même, la combustion des suies étant obtenue par élévation de température de l'électrode poreuse.

10. Procédé selon la revendication 8, **caractérisé par le fait que** l'énergie est dissipée à la surface de l'électrode poreuse par un ou plusieurs arcs électriques.
